# EUROPEAN PATENT APPLICATION

(11) **EP 3 685 995 A1**
(43) Date of publication of application: **29.07.2020**
(21) Application number: 20152061.6
(22) Date of filing: 15.01.2020
(51) Int. Cl.: B29C 64/307, B22F 3/105, B29C 64/321, B29C 64/393, B33Y 10/00, B33Y 30/00, B33Y 40/10, B33Y 50/02

(54) **ULTRASONIC ASSISTED ADDITIVE MANUFACTURING APPARATUS AND METHOD**

(30) Priority: 16.01.2019 US 201916249786
(71) Applicant: United Technologies Corporation, Farmington, CT 06032 (US)
(72) Inventor: BINEK, Lawrence, Glastonbury, CT 06033 (US); MORGANSON, David W., Marlborough, CT 06447 (US)
(74) Representative: Dehns

(57) **Abstract**

An additive manufacturing apparatus (10) includes a first reservoir (14) adapted to store at least one raw material feedstock (26) proximate to a working surface (12), a recoater (16), an energy beam generator (18), and an ultrasonic wroughting system (20). The recoater (16) is configured to transfer a portion (30) of the at least one raw material feedstock (26), on a layer-by-layer basis, from the first reservoir (14) to either the working surface (12) or to an in-process component (22) disposed on the working surface (12). The energy beam generator (18) is capable of producing and directing at least one energy beam (36) toward the working surface (12) with sufficient energy to melt and consolidate, on a layer-by-layer basis, the transferred portions (30) of the at least one raw material feedstock (26) into corresponding bulk material layers (38) of the in-process component (22). The ultrasonic wroughting system (20) is capable of producing and directing ultrasonic waves (50) to at least a topmost of the bulk material layers (38) sufficient to compress at least a topmost of the bulk material layers (38) along at least a build axis (44) of the in-process component (22).

## Description

### BACKGROUND

This disclosure relates generally to additive manufacturing and more specifically to improving in-process and bulk properties of additively manufactured components.
Additive manufacturing (AM) is a rapidly advancing technology, particularly for certain aspects of specialized construction such as 3-D models, prototypes and one-off replacement parts.

Despite advances in monitoring and control systems, there are still several limitations to widespread adoption. For example, shortcomings in quality and repeatability of conventional processes, particular for complex shapes and/or advanced materials, do not allow additive manufacturing to reach its full commercial or technological potential.

One issue that has arisen is that in some cases, consolidation of powder or other raw material feedstock can be inconsistent, even from one layer to another. Though not an exhaustive list, this can occur even with small, otherwise acceptable variations in composition of the raw material feedstock and/or small variations in the melting and consolidation of the raw material feedstock into bulk material layers. Much like other, more conventional manufacturing processes, small in-tolerance variations in raw material composition and consolidation can add up or "stack" causing a part to quickly fall out of specification.

In some instances, the additive manufacturing device crashes because tolerance stacking or other build errors cause the in-process component to not be sufficiently flush with the build plate. As a result, with conventional AM apparatus and processes, the recoater can contact the in-process part rather than glide smoothly over it with the next batch of raw material feedstock. This causes the machine to pause or even crash, which is costly in both time and material wasted. Efforts have been made to simulate tolerance stacking or other process variances in order to compensate for frequently observed errors, but these simulations are not sufficiently effective or consistent for many AM applications.

### SUMMARY

In accordance with a first aspect of the present disclosure, an additive manufacturing apparatus includes a first reservoir adapted to store at least one raw material feedstock proximate to a working surface, a recoater, an energy beam generator, and an ultrasonic wroughting system. The recoater is configured to transfer a portion of the at least one raw material feedstock, on a layer-by-layer basis, from the first reservoir to either the working surface or to an in-process component disposed on the working surface. The energy beam generator is capable of producing and directing at least one energy beam toward the working surface. The at least one energy beam has sufficient energy to melt and consolidate, on a layer-by-layer basis, the transferred portions of the at least one raw material feedstock into corresponding bulk material layers of the in-process component. The ultrasonic wroughting system is capable of producing and directing ultrasonic waves to at least a topmost of the bulk material layers. At least one of a magnitude and a frequency of the ultrasonic waves is sufficient to compress at least a topmost of the bulk material layers along at least a build axis of the in-process component.

In accordance with a second aspect of the present disclosure, a method of operating an additive manufacturing apparatus includes transferring a portion of at least one raw material feedstock, on a layer-by-layer basis, from a storage reservoir to either a working surface or to an in-process component disposed on the working surface. An energy beam generator produces and directs at least one energy beam toward the transferred portion of the at least one raw material feedstock. The at least one energy beam has sufficient energy to melt and consolidate, on a layer-by-layer basis, the transferred portions of the at least one raw material feedstock into corresponding bulk material layers of the in-process component. An ultrasonic wroughting system is capable of producing and directing ultrasonic waves to at least a topmost of the bulk material layers. At least one of a magnitude and a frequency of the ultrasonic waves is sufficient to compress at least a topmost of the bulk material layers along at least a build axis of the in-process component.

### BRIEF DESCRIPTION OF THE DRAWINGS

FIG. 1A shows operation of an AM apparatus according to the disclosure.
FIG. 1B shows final operation of the apparatus according to the disclosure.
FIG. 2 is a method according to the disclosure.

### DETAILED DESCRIPTION

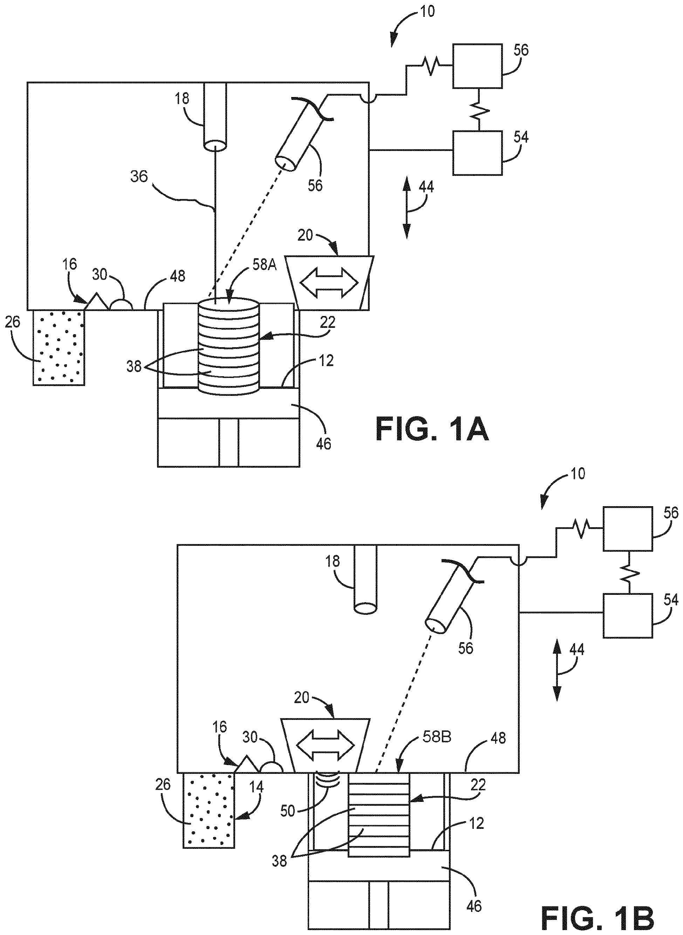

FIGS. 1A and 1B illustrate operation of additive manufacturing apparatus 10, such as a laser powder bed deposition system or an electron beam deposition system. Apparatus 10 generally includes working surface 12, first reservoir 14, recoater 16, energy beam generator 18, and ultrasonic wroughting system 20. FIG. 1A shows operation prior to activating ultrasonic wroughting system 20 and FIG. 1B shows operation after activating ultrasonic wroughting system 20, details of which will be explained in due course.

One or more in-process components 22 are formed in a layer-by-layer manner upon working surface 12. First reservoir 14 is adapted to store at least one raw material feedstock 26 proximate to working surface 12. Recoater 16 is configured to transfer portion 30 of raw material feedstock(s) 26, on a layer-by-layer basis, from first reservoir 14. For the initial layer, a first portion 30 can be transferred directly to working surface 12, while subsequent portions 30 are transferred by recoater 16 to in-process component(s) 22 disposed on working surface 12.

After each portion 30 of raw material feedstock(s) 26 is transferred from first reservoir 14 (or optionally a different reservoir, omitted for clarity), energy beam generator 18 can produce and direct at least one energy beam 36 toward working surface 12, which can also include in-process component 22 disposed thereon. At the very least, energy beam (s) 36 have sufficient energy to melt and consolidate, on a layer-by-layer basis, the transferred portions 30 of raw material feedstock(s) 26 into corresponding bulk material layers 38 of in-process component 22. It will be appreciated by a skilled artisan that the dimensions of layers 38 are highly exaggerated for clarity and ease of illustration.

As can be appreciated, working surface 12 is movable along build axis 44 of in-process component 22. By way of non-limiting example, FIGS. 1A and 1B show piston or hydraulically actuated platform 46. This is intended to help keep in-process component 22 effectively flush with the remainder of main platform 48. The goal is to iteratively move working surface downward along build axis 44 by a distance equivalent to an expected depth (or thickness) of a newly added and consolidated layer 38. However, both normal and abnormal process and raw material variations, over the course of a build, can cause significant deviation from expectations. As a result, as shown in FIG. 1A, in-process component 22 can protrude above a plane of main platform 48, along which recoater 16 is expected to glide. However, when this protrusion exceeds a certain threshold (varies by individual devices), recoater 16 is unable to transfer raw material feedstock in the normal manner and therefore will cause a machine fault and/or crash, necessitating reprocessing and/or scrapping of the partially-finished component.

Therefore, in addition to the above, additive manufacturing apparatus 10 includes ultrasonic wroughting system 20, which is capable of producing and directing ultrasonic waves 50 to at least a topmost of bulk material layer(s) 38. At least one of a magnitude and a frequency of ultrasonic waves 50 is sufficient to compress at least a topmost of bulk material layer(s) 38 along at least build axis 44. This compression counteracts effects of many of the above-described process variations, allowing for a more consistent depth / thickness of individual bulk material layers 38 and in turn, provides a more consistent product.

Generally, ultrasonic force applied to a sufficient degree achieves a result analogous to purely mechanical wroughting (i.e., approximating the magnitude of that used in sheet metal forming). This force can be used to flatten each recoated deposition layer prior to the next recoating operation. This effectively flattens the build plane beyond that seen in conventional AM It can also reduce or effectively eliminate structural curling in some cases, and even positively change bulk material properties. The wroughting system can be part of the recoater, upstream of the actual powder deposition step(s). Essentially, by applying the correct force to the already sintered surface, a new datum is established. The location of this datum can be communicated back to the machine tool which in-turn can compensate for the new layer height and adjust accordingly. Each build layer can be recalibrated and more demanding build geometries may be achievable. For example, unsupported overhangs have a higher chance of resolving correctly by embodiments of this apparatus and method.

To facilitate operation of these different elements, additive manufacturing controller 54 is programmed to operate ultrasonic wroughting system 20 after operation of the energy beam generator and before operation of recoater 16. As mentioned, consolidation can result in inconsistent layers 38, but addition of wroughting system 20 smooths and counteracts many of these variations before depositing the next layer(s) of raw material feedstock.

In certain embodiments, measuring device 56 is directed toward working surface 12. Device 56, such as an optical scanner, can be in communication with additive manufacturing controller 54 and can be adapted to measure coordinates of at least first datum 58A (FIG. 1A) and second datum 58B. In practice, there will likely be multiple pairs of corresponding first and second datums but a single pair is sufficient here for explanatory purposes. Coordinates of first datum(s) 58A on in-process component 22 are determined immediately before operation of ultrasonic wroughting system in order to provide a baseline location after consolidation. Coordinates of second datum(s) 58B on in-process component 22 are determined immediately after operation of ultrasonic wroughting system (prior to the next iteration of operating recoater 16). A difference in coordinates between pairs of first and second datums 58A, 58B can be calculated and communicated to controller 54. This is used by controller 54 to adjust other parameters of the build. Non-limiting examples include adjusting a volume of the next portion(s) 30 of raw material feedstock(s) 26 transferred by recoater 16 for one or more subsequent bulk material layers, as well as adjusting parameters of operating the energy beam (e.g., power, exposure time, tool path, etc.) for consolidating subsequent bulk material layer(s) 38.

In some instances, depending on the calculated difference between coordinates of first and second datums 58A, 58B, additive manufacturing controller can be programmed to adjust a compressive force applied by ultrasonic wroughting system 20 to at least one of the subsequent bulk material layers 38. This can be, for example, because wroughting energy was substantially too high or low to achieve desired results. However, in some cases, it may be desirable to adjust the compressive force to a degree sufficient to impart certain bulk material properties such as a residual compressive stress in in-process component 22.

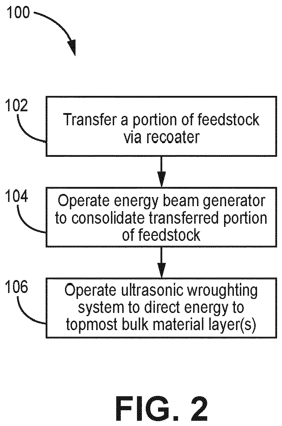

FIG. 2 shows a corresponding method 100 of operating an additive manufacturing apparatus, such as a laser powder bed deposition system or an electron beam deposition system. Step 102 includes transferring a portion of at least one raw material feedstock, on a layer-by-layer basis, from a storage reservoir to either a working surface or to an in-process component disposed on the working surface. At step 104, an energy beam generator is operated to produce and direct at least one energy beam toward the transferred portion of the at least one raw material feedstock. As with the apparatus of FIGS. 1A and 1B, the at least one energy beam has sufficient energy to melt and consolidate, on a layer-by-layer basis, the transferred portions of the at least one raw material feedstock into corresponding bulk material layers of the in-process component.

Method 100 also includes step 106, operating an ultrasonic wroughting system capable of producing and directing ultrasonic waves to at least a topmost of the bulk material layers. At least one of a magnitude and a frequency of the ultrasonic waves is sufficient to compress at least a topmost of the bulk material layers along at least a build axis of the in-process component.

Additional optional and/or preferable steps, not shown in FIG. 2 can include some or all of the following. In certain embodiments, the working surface is moved along the build axis to facilitate a subsequent transferring step 102, after iterations of step 104 (operating the energy beam generator) and step 106 (operating the ultrasonic wroughting system). Operating the ultrasonic wroughting system typically occurs after operation of the energy beam generator and before subsequent operation of the recoater to more correctly and efficiently perform a subsequent iteration of transferring step 102.

Embodiments of method 100 can also optionally include measuring coordinates of a first datum on the in-process component before operation of the ultrasonic wroughting system, and measuring coordinates of a second datum on the in-process component after operation of the ultrasonic wroughting system. These and potentially other coordinates and parameters can be communicated to the additive manufacturing controller, as well as calculation of a difference between the coordinates of the first and second datums. As noted above, this allows the additive manufacturing controller or other global controller to more precisely adjust certain aspects of later iterations of steps 102 and 104. For example, based on at least the calculated difference between coordinates of the first and second datums, one can adjust a volume of each portion of raw material feedstock(s) transferred by the recoater for forming a subsequent bulk material layer, and/or operation of the energy beam generator for consolidating the subsequently transferred feedstock into a subsequent bulk material layer. The calculated distance can also be used (alone or with other data) to adjust an effective compressive force applied by the ultrasonic wroughting system to at least one of the subsequent bulk material layers. And as previously noted, the effective compressive force can be adjusted on the fly such that it will positively affect the overall bulk material properties, such as but not limited to imparting a residual compressive stress in the in-process component.

### Discussion of Possible Embodiments

An embodiment of an additive manufacturing apparatus includes a first reservoir adapted to store at least one raw material feedstock proximate to a working surface, a recoater, an energy beam generator, and an ultrasonic wroughting system. The recoater is configured to transfer a portion of the at least one raw material feedstock, on a layer-by-layer basis, from the first reservoir to either the working surface or to an in-process component disposed on the working surface. The energy beam generator is capable of producing and directing at least one energy beam toward the working surface. The at least one energy beam has sufficient energy to melt and consolidate, on a layer-by-layer basis, the transferred portions of the at least one raw material feedstock into corresponding bulk material layers of the in-process component. The ultrasonic wroughting system is capable of producing and directing ultrasonic waves to at least a topmost of the bulk material layers. At least one of a magnitude and a frequency of the ultrasonic waves is sufficient to compress at least a topmost of the bulk material layers along at least a build axis of the in-process component.

The method of the preceding paragraph can optionally include any one or more of the following features, configurations and/or additional components:
A further example of the foregoing apparatus, wherein the working surface is movable along the build axis.

A further example of any of the foregoing apparatus, further comprising: an additive manufacturing controller programmed to operate the ultrasonic wroughting system after operation of the energy beam generator and before operation of the recoater.

A further example of any of the foregoing apparatus, further comprising a measuring device in communication with the additive manufacturing controller and adapted to measure coordinates of a first datum on the in-process component immediately before operation of the ultrasonic wroughting system and coordinates of a second datum on the in-process component immediately after operation of the ultrasonic wroughting system.

A further example of any of the foregoing apparatus, wherein, based on a calculated difference between coordinates of the first and second datums, the additive manufacturing controller adjusts at least one of: a volume of the portion of the at least one raw material feedstock transferred by the recoater for a subsequent bulk material layer, and operation of the energy beam generator for the subsequent bulk material layer.

A further example of any of the foregoing apparatus, wherein the measuring device comprises an optical measuring device directed toward the working surface.

A further example of any of the foregoing apparatus, wherein based on a calculated distance between coordinates of the first and second datums, the additive manufacturing controller is adapted to adjust a compressive force applied by the ultrasonic wroughting system to at least one of the subsequent bulk material layers.

A further example of any of the foregoing apparatus, wherein the compressive force is sufficient to impart a residual compressive stress in the in-process component.

A further example of any of the foregoing apparatus, wherein the additive manufacturing device comprises a laser powder bed deposition system or an electron beam deposition system.

A method of operating an additive manufacturing apparatus includes transferring a portion of at least one raw material feedstock, on a layer-by-layer basis, from a storage reservoir to either a working surface or to an in-process component disposed on the working surface. An energy beam generator produces and directs at least one energy beam toward the transferred portion of the at least one raw material feedstock. The at least one energy beam has sufficient energy to melt and consolidate, on a layer-by-layer basis, the transferred portions of the at least one raw material feedstock into corresponding bulk material layers of the in-process component. An ultrasonic wroughting system is capable of producing and directing ultrasonic waves to at least a topmost of the bulk material layers. At least one of a magnitude and a frequency of the ultrasonic waves is sufficient to compress at least a topmost of the bulk material layers along at least a build axis of the in-process component.

The method of the preceding paragraph can optionally include any one or more of the following features, configurations and/or additional components:
A further example of the foregoing method, further comprising: moving the working surface along the build axis to facilitate a subsequent transferring step after the steps of operating the energy beam generator and operating the ultrasonic wroughting system.

A further example of any of the foregoing methods, further comprising: operating the ultrasonic wroughting system after operation of the energy beam generator and before subsequent operation of the recoater to perform a subsequent transferring step.

A further example of any of the foregoing methods, further comprising: measuring coordinates of a first datum on the in-process component before operation of the ultrasonic wroughting system; and measuring coordinates of a second datum on the in-process component after operation of the ultrasonic wroughting system.

A further example of any of the foregoing methods, further comprising: communicating at least the coordinates of the first datum and the second datum to the additive manufacturing controller; and calculating a difference between the coordinates of the first and second datums.

A further example of any of the foregoing methods, further comprising: based on at least the calculated difference between coordinates of the first and second datums, adjusting at least one of: a volume of the portion of the at least one raw material feedstock transferred by the recoater for a subsequent bulk material layer, and operation of the energy beam generator for consolidating the subsequent bulk material layer.

A further example of any of the foregoing methods, further comprising: based on at least the calculated distance between the first and second datums, adjusting an effective compressive force applied by the ultrasonic wroughting system to at least one of the subsequent bulk material layers.

A further example of any of the foregoing methods, wherein the additive manufacturing device comprises a laser powder bed deposition system or an electron beam deposition system.

A further example of any of the foregoing methods, wherein the compressive force is sufficient to impart a residual compressive stress in the in-process component.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. An additive manufacturing apparatus (10) comprising:
a working surface (12);
a first reservoir (14) adapted to store at least one raw material feedstock (26) proximate to the working surface (12);
a recoater (16) configured to transfer a portion (30) of the at least one raw material feedstock (26), on a layer-by-layer basis, from the first reservoir (14) to either the working surface (12) or to an in-process component (22) disposed on the working surface (12);
an energy beam generator (18) capable of producing and directing at least one energy beam (36) toward the working surface (12), the at least one energy beam (36) having sufficient energy to melt and consolidate, on a layer-by-layer basis, the transferred portions (30) of the at least one raw material feedstock (26) into corresponding bulk material layers (38) of the in-process component (22); and
an ultrasonic wroughting system (20) capable of producing and directing ultrasonic waves (50) to at least a topmost of the bulk material layers (38),
wherein at least one of a magnitude and a frequency of the ultrasonic waves (50) is sufficient to compress at least the topmost of the bulk material layers (38) along at least a build axis (44) of the in-process component (22).

2. The apparatus of claim 1, wherein the working surface (12) is movable along the build axis (44).

3. The apparatus of claim 1 or 2, further comprising:
an additive manufacturing controller (54) programmed to operate the ultrasonic wroughting system (20) after operation of the energy beam generator (18) and before operation of the recoater (16).

4. The apparatus of claim 3, further comprising a measuring device (56) in communication with the additive manufacturing controller (54) and adapted to measure coordinates of a first datum (58A) on the in-process component (22) immediately before operation of the ultrasonic wroughting system (20) and coordinates of a second datum (58B) on the in-process component (22) immediately after operation of the ultrasonic wroughting system (20), wherein, optionally, the measuring device (56) comprises an optical measuring device directed toward the working surface (12) .

5. The apparatus of claim 4, wherein, based on a calculated difference between coordinates of the first and second datums (58A, 58B), the additive manufacturing controller (54) adjusts at least one of: a volume of the portion (30) of the at least one raw material feedstock (26) transferred by the recoater (16) for a subsequent bulk material layer (38), and operation of the energy beam generator (18) for the subsequent bulk material layer (38).

6. The apparatus of claim 4 or 5, wherein, based on a/the calculated difference between coordinates of the first and second datums (58A, 58B), the additive manufacturing controller (54) is adapted to adjust a compressive force applied by the ultrasonic wroughting system (20) to at least one of the subsequent bulk material layers (38), and wherein, optionally, the compressive force is sufficient to impart a residual compressive stress in the in-process component (22).

7. The apparatus of any preceding claim, wherein the additive manufacturing apparatus (10) comprises a laser powder bed deposition system or an electron beam deposition system.

8. A method (100) of operating an additive manufacturing apparatus (10), the method (100) comprising:
transferring a portion (30) of at least one raw material feedstock (26), on a layer-by-layer basis, from a storage reservoir (14) to either a working surface (12) or to an in-process component (22) disposed on the working surface (12);
operating an energy beam generator (18) to produce and direct at least one energy beam (36) toward the transferred portion (30) of the at least one raw material feedstock (26), the at least one energy beam (36) having sufficient energy to melt and consolidate, on a layer-by-layer basis, the transferred portions (30) of the at least one raw material feedstock (26) into corresponding bulk material layers (38) of the in-process component (22); and
operating an ultrasonic wroughting system (20) capable of producing and directing ultrasonic waves (50) to at least a topmost of the bulk material layers (38);
wherein at least one of a magnitude and a frequency of the ultrasonic waves (50) is sufficient to compress at least the topmost of the bulk material layers (38) along at least a build axis (44) of the in-process component (22).

9. The method of claim 8, further comprising:
moving the working surface (12) along the build axis (44) to facilitate a subsequent transferring step after the steps of operating the energy beam generator (18) and operating the ultrasonic wroughting system (20).

10. The method of claim 8 or 9, further comprising:
operating the ultrasonic wroughting system (20) after operation of the energy beam generator (18) and before subsequent operation of a recoater (16) to perform a subsequent transferring step.

11. The method of any of claims 8 to 10, further comprising:
measuring coordinates of a first datum (58A) on the in-process component (22) before operation of the ultrasonic wroughting system (20); and
measuring coordinates of a second datum (58B) on the in-process component (22) after operation of the ultrasonic wroughting system (20).

12. The method of claim 11, further comprising:
communicating at least the coordinates of the first datum (58A) and the second datum (58B) to an additive manufacturing controller (54); and
calculating a difference between the coordinates of the first and second datums (58A, 58B).

13. The method of claim 12, further comprising:
based on at least the calculated difference between coordinates of the first and second datums (58A, 58B), adjusting at least one of: a volume of the portion (30) of the at least one raw material feedstock (26) transferred by a/the recoater (16) for a subsequent bulk material layer (38), and operation of the energy beam generator (18) for consolidating the subsequent bulk material layer (38), and/or adjusting an effective compressive force applied by the ultrasonic wroughting system (20) to at least one of the subsequent bulk material layers (38).

14. The method of any of claims 8 to 13, wherein the additive manufacturing apparatus (10) comprises a laser powder bed deposition system or an electron beam deposition system.

15. The method of any of claims 8 to 14, wherein the compressive force is sufficient to impart a residual compressive stress in the in-process component (22).
